# EUROPEAN PATENT SPECIFICATION

(11) **EP 2 209 150 B1**
(45) Date of publication and mention of the grant of the patent: **23.01.2013**
(21) Application number: 09252926.2
(22) Date of filing: 30.12.2009
(51) Int. Cl.: H01M 2/02, H01M 2/30, H01M 10/04

(54) **Secondary battery**
Sekundärbatterie
Batterie secondaire

(30) Priority: 23.12.2009 US 646966; 31.12.2008 US 142047 P
(43) Date of publication of application: 21.07.2010
(73) Proprietor: Samsung SDI Co., Ltd., Gyeonggi-do (KR)
(72) Inventor: Kim, Joongheon, Yongin-si, Gyeonggi-do (KR)
(74) Representative: Mounteney, Simon James

(56) References cited:
- EP-A1- 1 717 894
- JP-A- 2003 109 579
- US-A1- 2008 241 676

## Description

The present invention relates to a secondary battery.

### TECHNICAL BACKGROUND

Lithium ion secondary batteries are classified as polygonal secondary batteries, cylindrical secondary batteries or pouch secondary batteries according to their structures.

A pouch secondary battery typically includes an electrode assembly, a pouch surrounding the electrode assembly, a protection circuit module and a case.

A polygonal or cylindrical secondary battery typically includes an electrode assembly in a can, a protection circuit module and a cover.

Particularly in the case of a pouch secondary battery, but also in the case of other structures, the electrode assembly comprises one or more electrode tabs that project from the assembly. These tabs are somewhat vulnerable as they are made from relatively thin material and hence they can be deformed by even a relatively weak load. In addition, the tabs may be deformed even without the application of an external force. As a consequence, an undesirably high proportion of manufacturing and assembly defects can occur.

JP 2003109579 discloses a battery comprising an electrode assembly sealed within an enclosure, with electrode tabs having ridged parts projecting from the enclosure.

US 2008/0241676 discloses a battery that has an armour, a structure housed in the armour and having a separator disclosed between first and second electrodes, and external terminals with respective leads connected to the first and second electrodes of the structure.

EP 1 717 894 discloses a cylindrical lithium secondary battery that includes an electrode assembly formed by stacking a first electrode plate having a first electrode tap, a second electrode plate having a second electrode tap, and a separator interposed between the first and second electrode plates.

The present invention seeks to provide a secondary battery including an electrode tab that cannot be easily deformed by an external load or displaced from its proper position.

Accordingly, the invention provides a secondary battery as set out in Claim 1. Preferred features of the invention are set out in Claims 2 to 6.
According to the present invention, deformation of an electrode tab due to an external load and deviation of the electrode tab from a proper position can be prevented due to increased rigidity of the electrode tab. As a consequence, contact errors can be prevented when the electrode tab makes contact with a pre-charger during a pre-charging operation of the secondary battery and welding errors can be minimized between a terminal of a protection circuit module and the electrode tab when the electrode tab is welded to the protection circuit module.

### BRIEF DESCRIPTION OF THE DRAWINGS

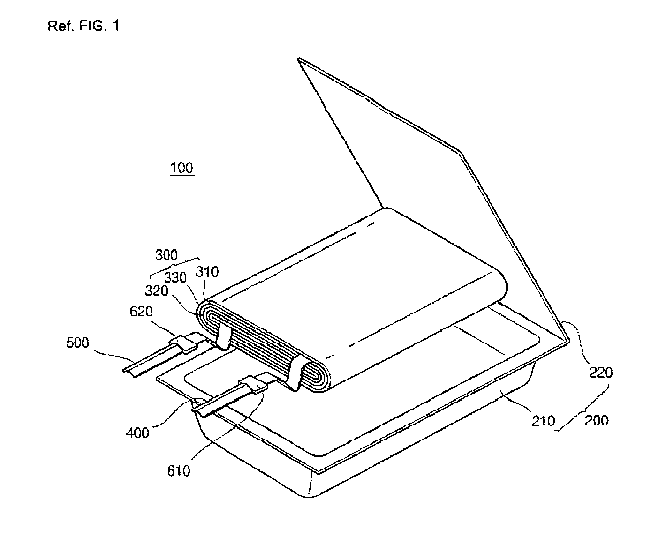

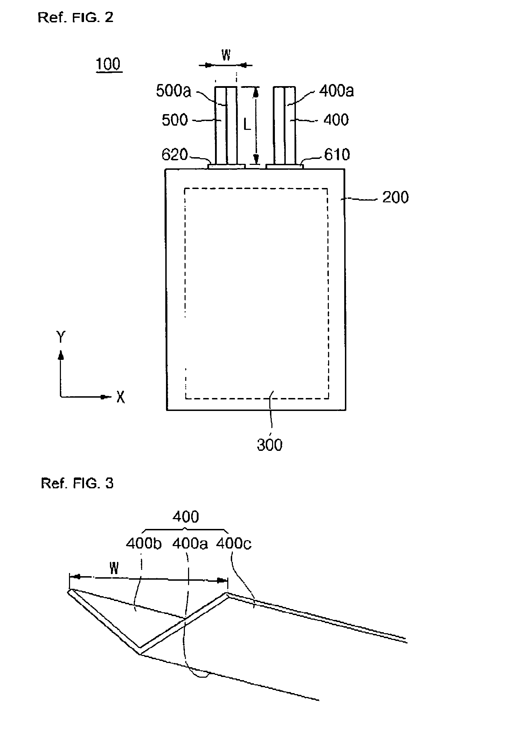

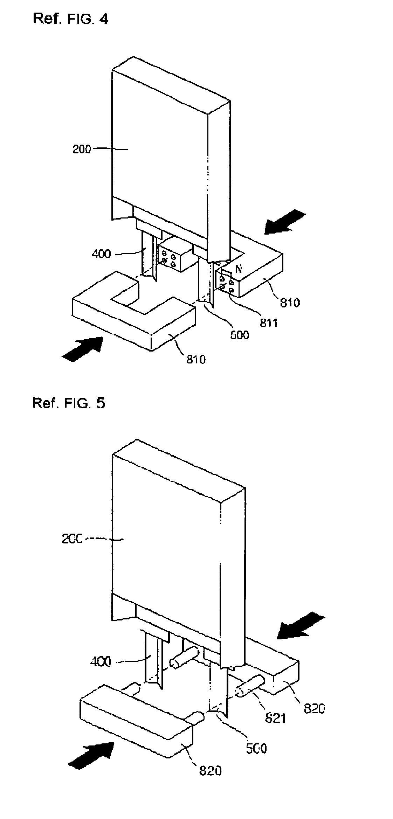

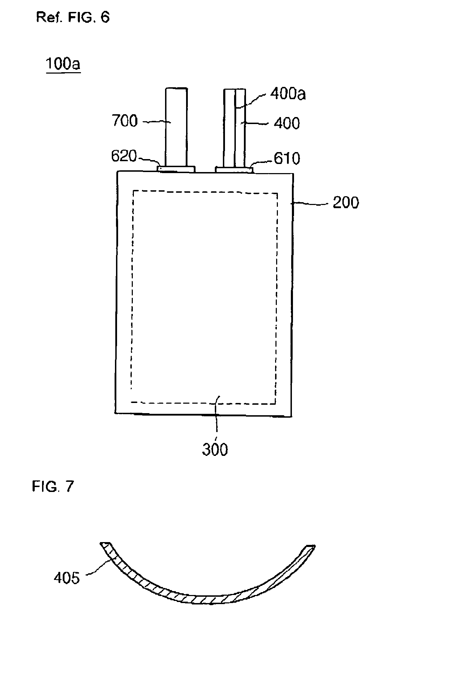

Embodiments of the invention will be described by way of example and with reference to the accompanying drawings in which:-
Ref. FIG. 1 is an exploded perspective view of a secondary battery;
Ref. FIG. 2 is a front view of the secondary battery of Ref. FIG. 1;
Ref. FIG. 3 is a perspective view of an electrode tab of the secondary battery of Ref. FIG. 1;
Ref. FIGS. 4 and 5 are perspective views of the secondary battery of Ref. Figure 1 and pre-chargers;
Ref. FIG. 6 is a front view of a further secondary battery.
FIGS. 7 to 13 are sectional views of electrode tabs secondary batteries according to other embodiments of the present invention;
FIGS. 14 and 15 are front views of electrode tabs of secondary batteries according to embodiments of the present invention;
Ref. FIG. 16 is a front view of electrode tabs of a secondary battery;
Ref. FIGS. 17a to 18b are views of electrode tabs of further secondary batteries; and
FIG. 19 is a perspective view illustrating a method of bending electrode tabs of a secondary battery according to an embodiment of the present invention.

### DETAILED DESCRIPTION

Hereinafter, embodiments of the present invention will be described in detail with reference to the accompanying drawings. Although pouch secondary batteries are described as embodiments of the present invention, the scope of the present invention is not limited thereto.

Ref. FIGS. 1 and 2 are an exploded perspective view and a front view of a secondary battery 100. Ref. FIG. 3 is a perspective view of an electrode tab 400 used in said secondary battery.

Referring to Ref. FIGS. 1 to 3, the secondary battery 100 includes an enclosure in the form of a pouch 200 and an electrode assembly 300 accommodated in the pouch 200.

The pouch 200 has an integrally formed substantially box-like shape and includes a first pouch portion 210 and a second pouch portion 200 that are foldable about a short edge thereof. A recess in which the electrode assembly 300 is accommodated is formed at a central portion of the first pouch portion 210 by pressing. The pouch 200 has a triple layer including a nylon layer, an aluminum thin film, and a polyolefin resin layer.

The electrode assembly 300 Includes a first electrode plate 310, a second electrode plate 320, and a separator 330 interposed between the first electrode plate 310 and the second electrode plate 320. The first electrode plate 310, the second electrode plate 320, and the separator 330 are wound to form a jelly-roll configuration thereby. The electrode assembly 300 is sealed together with an electrolyte by the pouch 200.

The first electrode plate 310 is formed by coating a first electrode active material such as lithium oxide on opposite sides of a first electrode collector formed with a thin film such as an aluminum foil. The second electrode plate 320 is formed by coating a second electrode active material such as carbon on opposite sides of a second electrode collector formed with a thin film such as a copper foil.

A first electrode tab 400 is formed on one side of the first electrode plate 310 of the electrode assembly 300, and a second electrode tab 500 is formed on one side of the second electrode plate 320. The first electrode tab 400 and the second electrode tab 500 are disposed in parallel and are spaced apart from each other in the jelly-roll configuration. Some portions of the first electrode tab 400 and the second electrode tab 500 are exposed to the outside of the pouch 200 so that the first electrode tab 400 and the second electrode tab 500 are electrically connected to a protection circuit module (not shown). The first electrode tab 400 and the second electrode tab 500 are generally made of a metal such as aluminum, copper, or nickel, and have high electrical conductivities to minimize voltage drops.

A first insulation tape 610 and a second insulation tape 620 are formed between the first electrode tab 400 and the pouch 200 and between the second electrode tab 500 and the pouch 200 respectively. The first insulation tape 610 and the second insulation tape 620 are attached to portions of the first electrode tab 400 and the second electrode tab 500 that make contact with the pouch 200 to prevent short-circuits between the electrode tabs and the pouch 200. Hereinafter, it is assumed that the first electrode plate 310 and the first electrode tab 400 are the positive electrode and the second electrode plate 320 and the second electrode tab 500 is the negative electrode. In this case, the first electrode tab 400 is generally made of aluminum and the second electrode tab 500 is made of nickel. In Ref. FIG. 2, the X-direction and the Y-direction are the widthwise (W) and lengthwise (H) directions of the first electrode tab 400 and the second electrode tab 500. Hereinafter, the first electrode tab 400 will be described for convenience's sake, but the second electrode tab 500 has the same characteristics as the first electrode tab 400.

The first electrode tab 400 has a bent structure whose widthwise cross-section is V-shaped. A bending line 400a is formed at a central portion of the first electrode tab 400 along the lengthwise direction of the first electrode tab 400 by a jig or a press. A first side tab 400b and a second side tab 400c are bent about the bending line 400a. The first side tab 400b and the second side tab 400c form a specific angle between them. The "V" may be oriented in the opposite direction to that of this particular disclosure.

A conventional electrode tab has a narrow width and a long length, and has a thin thickness of approximately 0.1 mm. Hence, the electrode tab may be deformed even by a very weak load. In addition, the electrode tab may be deformed even without an external force due to its structural characteristics. This increases the fraction of defective secondary batteries due to following processes after electrode tabs are deformed or are not arranged in proper positions.

Strength generally relates to a maximum load or stress that can be applied to a member or a structure while maintaining the function of the member or the structure until the member or the structure is fractured, and is a natural value for measuring the properties of a material. Meanwhile, rigidity is a property by which a loaded structure or member resists against deformation, and the values of rigidity are different according to the shape or support of the structure even in the case of the same material. Generally, as strength increases, rigidity also increases. Strength can be enhanced by an alloy, and rigidity can be enhanced through a modification of a structure as well as by an alloy.

The rigidity of the first electrode tab 400 is increased by forming the bending line 400a at a central region of the electrode tab 400 along the lengthwise(H) direction of the first electrode tab 400 and making the first electrode tab 400 V-shaped. As the first electrode tab 400 has the V-shaped bending structure, when an external load is applied to an upper portion, a front portion, and a rear portion of the first electrode tab 400, the first electrode tab 400 is not easily deformed as compared with a flat electrode tab. This is because the rigidity of the first electrode tab 400 is increased by the V-shaped structure of the first electrode tab 400.

As a consequence of this structure, the fraction of defective secondary batteries can be reduced by minimizing deformation of the first electrode tab 400 due to external loads applied when the first electrode tab 400 is preliminarily charged and is welded to a terminal of a protection circuit module and the secondary battery 100 is moved.

Refs. FIGS. 4 and 5 are perspective views of the secondary battery 100 and pre-chargers 810 and 820. The pre-charger 810 of Ref. FIG. 4 has blocks at portions thereof that make contact with the electrode tabs 400 and 500, and the pre-charger 820 of Ref. FIG. 5 has pins at portions thereof that make contact with the electrode tabs 400 and 500.

Referring to Ref. FIGS. 4 and 5 together with Ref. FIG. 3, although the sizes of the electrode tabs 400 and 500 will differ according to the capacity of the secondary battery 100, the widths thereof will often tend to be 4 to 6 mm and 2 to 3 mm in the case of a secondary battery 100 of small capacity. Hence, if the electrode tabs 400 and 500 are deformed or deviated from proper positions before a pre-charging operation, the pre-chargers 810 and 820 and the electrode tabs 400 and 500 cannot make contact with each other, causing inferiority. In particular, since the pin type pre-charger 820 has small contact areas of the contact pins 821 with the electrode tabs 400 and 500, the electrode tabs 400 and 500 and the pre-charger 820 cannot make contact with each other when the electrode tabs 400 and 500 are normally arranged, causing inferiority.

However, the contact inferiority between the pre-chargers 810 and 820 and the electrode tabs 400 and 500 is prevented by the V-shaped structure of the electrode tabs 400 and 500 that serves to minimize deformation of the electrode tabs 400 and 500 in the processes when the pre-charging is operated.

In the case of the first electrode tab 400, the distance between an end of the first side tab 400b and an end of the second side tab 400c is preferably more than 0.5 mm. In other words, the width W of the bent first electrode tab 400 is preferably more than 0.5 mm. Four probe pins 811 are formed in portions of the block type pre-charger 810 that make contact with the first electrode tab 400, and the first electrode tab 400 needs to make contact with at least one of the four probe pins 811 to charge the secondary battery. Since the interval L between the two probe pins 811 located in a direction perpendicular to the length H of the first electrode tab 400 is in this case 0.5 mm, the distance between an end of the first side tab 400b and an end of the second side tab 400c needs to be more than 0.5 mm to prevent contact errors of the first electrode tab 400 and the probe pins 811 in advance. Different pre-chargers have different dimensions, of course, so these dimensions are merely illustrative.

The electrode tabs may also be deformed when contacted with the pre-chargers 810 and 820. In particular, since the block type pre-charger 810 has wider contact areas with the electrode tabs than the pin type pre-charger 820, larger loads are transferred to the electrode tabs, deforming the electrode tabs and displacing the electrode tabs from their proper positions.

However, since the electrode tabs 400 and 500 have V-shaped bending structures, deformation of the electrode tabs 400 and 500 can be minimized by enabling the electrode tabs 400 and 500 to support the pressure of the pre-charger during a pre-charging operation, and thus deformation of the electrode tabs 400 and 500 and deviation of the electrode tabs 400 and 500 from proper positions can be minimized during movement of the secondary battery 100 and before the welding operation of the protection circuit module.

Ref. FIG. 6 is a front view of a further secondary battery 100. Only a first electrode tab 400 is bent in a V-shape. The shape of the first electrode tab 400 of Ref. FIG. 6 is the same as that of the electrode tab 400 Illustrated in Ref. FIGS. 1 to 5. The second electrode tab 700 has no bending line.

The first electrode tab 400 is a positive electrode tab, and may be made of the same material as that of a first electrode collector such as aluminum. Aluminum has high malleability and ductility as compared with the second electrode tab 400 made of nickel, but has low strength and rigidity.

As in the secondary batteries disclosed previously herein, the rigidity of the electrode tab 400 is increased by forming a bending line 400a at a central portion of the first electrode tab 400 along the lengthwise direction of the first electrode tab 400.

Although not illustrated, the second electrode tab may alternatively have a V-shape. However, the secondary battery is not limited by which electrode tab has a V-shape.

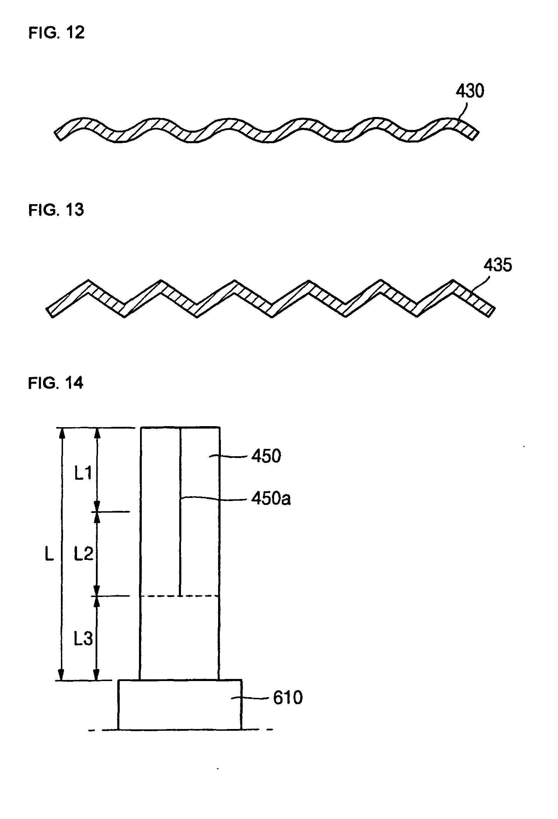

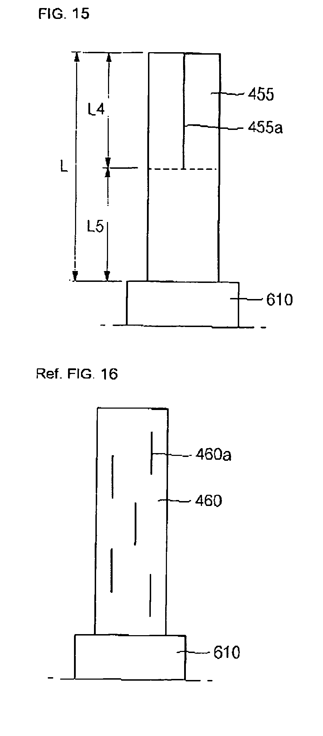

FIGS. 7 to 13 are sectional views of electrode tabs 405, 410, 415, 420, 425, 430, and 435 according to further embodiments of the present invention, as discussed in connection with FIGS. 14 and 15 below. In FIGS. 7 to 13, the sectional views are taken along the widthwise directions of the electrode tabs. The electrode tabs of FIGS. 7 to 13 are different from the first electrode tab 400 of Ref. FIGS. 1 to 5 only in the widthwise cross-sections, but the basic object and other descriptions of preventing deformation of the electrode tabs due to an external load and deviation of the electrode tabs from proper positions are the same as the electrode tab of Ref. FIGS. 1 to 6. It should be understood that the widthwise structures of the electrode tabs of FIGS. 7 to 13 can be the same over the overall lengthwise direction but they are formed herein at specific positions of the lengths of the electrode tabs. It is also possible to include two or more different cross-sectional profiles within a single tab. Hereinafter, first electrode tabs will be described for convenience's sake.

Referring to FIG. 7, the widthwise cross-section of the first electrode tab 405 according to the embodiment of the present invention has an arcuate profile with a specific curvature that is constant along the widthwise direction of the first electrode tab 405.

Since the curvature of the first electrode tab 405 is constant, deformation of the first electrode tab 405 can be minimized by uniformly distributing an external load.

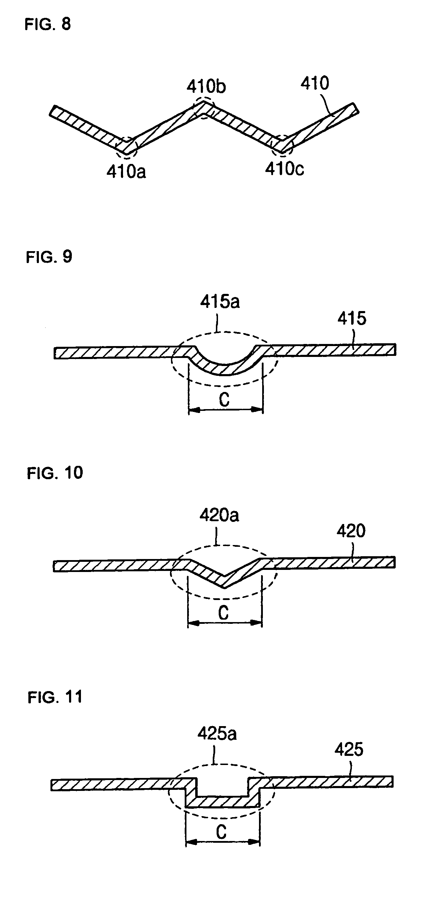

Referring to FIG. 8, the widthwise cross-section of the first electrode tab 410 according to the embodiment of the present invention has three bending lines 410a, 410b, and 410c along the lengthwise direction of the first electrode tab. Hence, the first electrode tab 410 has a W-shaped widthwise cross-section by the existence of the bending lines 410a, 410b, and 410c.

Since the first electrode tab 410 is bent twice more as compared with the first electrode tab 400 of Ref. FIGS. 1 to 5, deformation of the first electrode tab 410 due to an external load can be remarkably prevented.

Other rectilinear and arcuate cross-sectional profiles are equally suitable.

Referring to FIGS. 9 to 11, in the widthwise cross-sections of the first electrode tabs 415, 420, and 425 according to the embodiments of the present invention, protrusions 415a, 420a, and 425a are formed at widthwise central portions C of the first electrode tabs 415, 420, and 425. The protrusions 415a, 420a, and 425a are machined at central portions of the first electrode tabs 415, 420, and 425 along the lengthwise directions of the first electrode tabs 415, 420, and 425 by a jig or a press. The widthwise cross-sections of the protrusions 415a, 420a, and 425a have an arc shape, a rectangular shape, and a triangular shape. Other rectilinear and arcuate formations are equally suitable for the protrusions and it is possible to include a plurality of such protrusions of similar or different profiles within a single tab.

The deformation of the first electrode taps 415, 420, and 425 can be minimized when the first electrode taps 415, 420, and 425 receive the external loads because the protrusions 415a, 420a, and 425a increase the rigidity of the first electrode tabs 415, 420, and 425.

Referring to FIGS. 12 and 13, the widthwise cross-sections of first electrode tabs 430 and 435 according to the embodiments of the present invention have corrugated shapes. The first electrode tab 430 of FIG. 12 has sinusoidal corrugations, and the first electrode tab 435 of FIG. 13 has saw-toothed corrugations whose bent portions have a specific angle. In FIGS. 12 and 13, the wavy or zigzag shapes of the first electrode tabs 430 and 435 are regularly formed, but may also be irregularly formed.

The deformation of the first electrode tabs 430 and 435 can be minimized when the first electrode tab 430 and 435 receive the external loads because the corrugations increase the rigidity of the first electrode tabs 430, and 435.

FIGS. 14 and 15 are front views of electrode tabs 450 and 455according to embodiments of the present invention and Ref. FIG. 16 is a front view of a further secondary battery as disclosed herein. The electrode tabs of FIGS. 14 and 15 and Ref. FIG. 16 are different from the first electrode tabs 400 and 500 of REF. FIGS. 1 to 5 only in the positions of the bending lines and the lengths of the bending lines, but the basic object and other descriptions of preventing deformation of the electrode tabs due to an external load and deviation of the electrode tabs from proper positions are the same as the electrode tab of REF. FIGS. 1 to 6. It should be understood that the electrode tabs of FIGS. 14 and 15 and Ref. FIG. 16 may have alternative widthwise cross-sections, such as those of FIGS. 7 to 13, instead of the V-shapes. Hereinafter, first electrode tabs will be described for convenience' sake.

Referring to FIG. 14, the length of the first electrode tab 450 according to the embodiment of the present invention is classified into an upper region L1, a central region L2, and a lower region L3 of the first electrode tab 450. The upper region L1 of the first electrode tab 450 is from the top end of the first electrode tab 450 to a position one third from the top end of the first electrode tab 450. The central region L2 of the first electrode tab 450 is from a position one third from the top end of the first electrode tab 450 to two thirds from the top end of the first electrode tab 450. The lower region L3 of the first electrode tab 450 is from a position two thirds from the top end of the first electrode tab 450 to the top end of an insulation tape 610.

The bending line 450a and the V shape of the first electrode tab 450 are formed at the upper region L1 and the central region L2 of the first electrode tab 450. The portion of the first electrode tab 450 below the lower region L3 is supported by the pouch and the insulation tape 610. Hence, since the pouch and the insulation tape 610 support some portions of the first electrode tab 450 that are not exposed from the insulation tape 610 to the outside, the lower region L3 of the first electrode tab 450 can maintain its rigidity even without a bending line and a V-shaped bending structure.

Referring to FIG. 15, the length of a first electrode tab 455 according to the embodiment of the present invention is classified into an upper region L4 and a lower region L5. The upper region L4 of the first electrode tab 455 is from the top end of the first electrode tab 455 to a position one half from the top end of the first electrode tab 455 and the lower region L5 of the first electrode tab 455 is from a position one half from the top end of the first electrode tab 455 to the top end of an insulation tape 610.

A bending line 455a and a V-shaped structure are formed in the upper region L4 of the first electrode tab 455. The portion of the first electrode tab 455 below the lower region L5 Is supported by the pouch and the insulation tape 610. Hence, since the pouch and the insulation tape 610 support some portions of the first electrode tab 455 that are not exposed from the insulation tape 610 to the outside, the lower region L5 of the first electrode tab 455 can maintain its rigidity even without a bending line and a V-shaped bending structure.

Referring to Ref. FIG. 16, in a first electrode tab 460 of a secondary battery disclosed herein, bending lines 460a and V-shaped structures are located at random. The positions, sizes, shapes of the bending lines 460a and the V-shaped structures are not particularly limited only if the electrode tab 460 can maintain its rigidity.

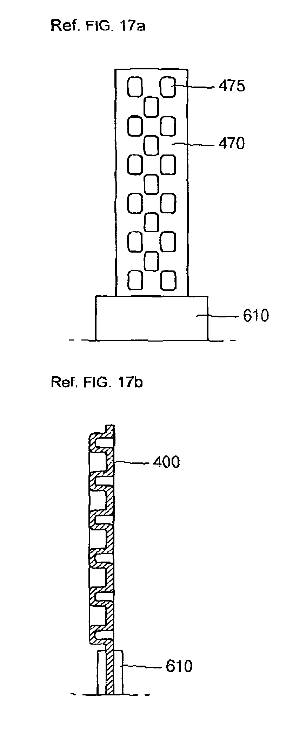

Ref. FIGS. 17a and 17b show a plan view and a lengthwise sectional view of a first electrode tab 470 according to a further secondary battery disclosed herein.

In this battery, the electrode tab 470 is non-planar, as previously disclosed. However, in this case, simple bend lines are not used. Instead, the electrode tab 470 comprises a series of generally rectangular recesses 475. These recesses 475 provide rigidity to the tab 470 in a similar manner to the bends of the previous disclosures.

It will seem that the recesses 475 are generally rectangular in their shape, but many other shapes are equally suitable. Furthermore, although the recesses are arranged in three columns and eleven rows in this battery, it is important to understand that more or fewer rows or columns can be included.

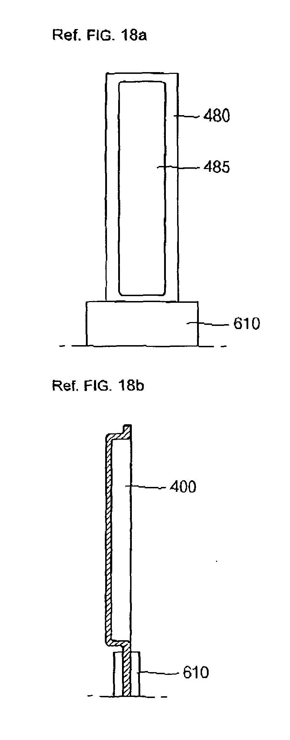

Ref. FIGS. 18a and 18b are a plan view and a sectional view of a further electrode tab 480 in accordance with the invention. In this case, the electrode tab 480 includes a single rectangular recess 485. The recess 485 in parts increased rigidity to the electrode tab 480 in a similar manner to the batteries previously disclosed herein. It will be noted that this electrode tab is, once again, non-planar. Although the recess is generally rectangular, many other shapes can be used for the recess.

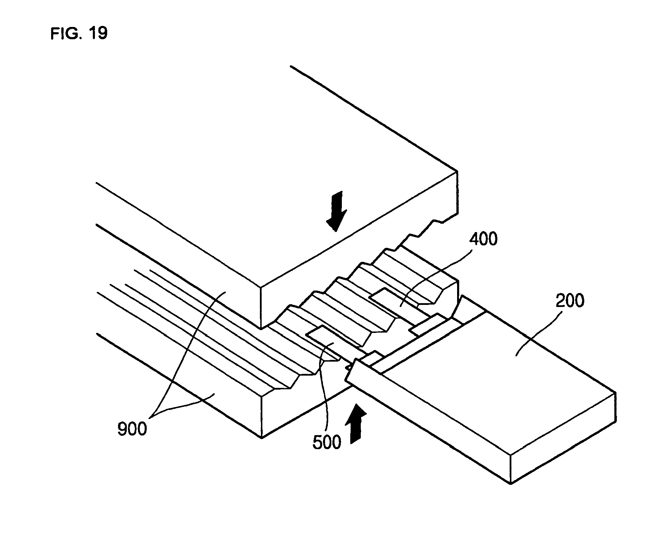

FIG. 19 is a perspective view illustrating a method of bending electrode tabs 400 and 500 according to an embodiment of the present invention.

Referring to FIG. 19, after an electrode assembly 300 is sealed by a pouch 200, portions of the electrode assembly 300 that protrude to the outside of the pouch 200 are pressed by a jig or press 900. In the embodiment of the present invention, the jig or press 900 has a saw-toothed shape to make the electrode tabs 400 and 500 V-shaped. However, it is apparent that the shapes of the electrode tabs of FIGS. 7 to 13 may be formed by manufacturing the jig or press in correspondence to them.

The bent electrode tabs 400 and 500 may be flattened when they are pressed by a welding jig during their coupling to a terminal (not shown) of a protection circuit module (not shown).

The non-planar structures of the electrode tabs according to the above-mentioned embodiments of the present invention increase the rigidities of the electrode tabs, minimizing deformation of the electrode tabs and deviation of the electrode tabs from their proper positions. Accordingly, the fraction of defective secondary batteries can be reduced by locating electrode tabs at proper positions during pre-charging operations of the electrode tabs and welding of the electrode tabs to protection circuit modules.

It should be understood that the specifically described shapes and cross-sectional profiles are mere examples, and many other shapes and profiles are possible. It is also possible to have different configurations on different tabs within the same battery pack and it is possible to include a mixture of formations on a single tab.

Although the embodiments of the present invention have been described in detail hereinabove, it should be understood that many variations and modifications of the basic inventive concept herein described will still fall within the scope of the present invention as defined in the appended claims.

## Claims

1. A secondary battery comprising:
an electrode assembly (300) having a first electrode plate (310) and a second electrode plate (320), each electrode plate (310, 320) being provided with a respective electrode tab (400, 405, 410, 415, 420, 425, 430, 435, 450, 455, 460, 470, 480, 500) that extends from the electrode plate (310, 320);
wherein a portion of one of the electrode tabs (400; 405, 410, 415, 420, 425, 430, 435, 450, 455, 460, 470, 480, 500) is non-planar;
wherein the electrode assembly (300) is accommodated within an enclosure, and the non-planar portion extends along a portion of the electrode tab (400, 405, 410, 415, 420, 425, 430, 435, 450, 455, 460, 470, 480, 500) that occupies a part of the length of a part of the electrode tab (400, 405, 410, 415, 420, 425, 430, 435, 450, 455, 460, 470, 480, 500) that projects from the enclosure;
wherein the non-planar portion comprises a bend; and
each respective electrode tab is provided with an insulation tape (610, 620) formed between each respective electrode tab and the enclosure, **characterised in that**
the electrode tab comprises an upper region (L1 and L2, L4) and a lower region (L3, L5), wherein the upper region is from the top end of the electrode tab (455) to a position one half to two thirds from the top end of the electrode tab and the lower region is from a position one half to two thirds from the top end of the electrode tab to the top end of an insulation tape (610),
the non-planar portion is formed in the upper region of the electrode tab (L1 and L2, L4), wherein:
at least part of the non-planar portion has an arcuate cross-section; and/or
at least part of the non-planar portion has a rectilinear cross-section that is V-shaped, W-shaped or rectangular; and/or
wherein the non-planar portion comprises one or more corrugations that are saw-toothed or sinusoidal.

2. A secondary battery according to any preceding claim, wherein the said electrode tab having the non-planar portion comprises one or more additional non-planar portions.

3. A Secondary battery according to any preceding claim, wherein the electrode tab (400, 405, 410, 415, 420, 425, 430, 435, 450, 455, 460, 470, 480, 500) has a width of from 2 mm to 6 mm.

4. A secondary battery according to any preceding claim, wherein a portion of the other electrode tab (400, 405, 410, 415, 420, 425, 430, 435, 450, 455, 460, 470, 480, 500) is non-planar.

5. A secondary battery according to any preceding claim, wherein the non-planar portion comprises one or more recesses.

6. A secondary battery according to Claim 5, wherein the non-planar portion comprises a plurality of recesses that extend over substantially the whole of the non-planar portion.

## Patentansprüche

1. Sekundärbatterie, die Folgendes umfasst:
eine Elektrodenbaugruppe (300), die eine erste Elektrodenplatte (310) und eine zweite Elektrodenplatte (320) hat, wobei jede Elektrodenplatte (310, 320) mit einer jeweiligen Elektrodenzunge (400, 405, 410, 415, 420, 425, 430, 435, 450, 455, 460, 470, 480, 500) versehen ist, die sich von der Elektrodenplatte (310, 320) aus erstreckt,
wobei ein Abschnitt der einen der Elektrodenzungen (400, 405, 410, 415, 420, 425, 430, 435, 450, 455, 460, 470, 480, 500) nicht eben ist,
wobei die Elektrodenbaugruppe (300) innerhalb eine Hülle aufgenommen wird und sich der nicht ebene Abschnitt entlang eines Abschnitts der Elektrodenzunge (400, 405, 410, 415, 420, 425, 430, 435, 450, 455, 460, 470, 480, 500) erstreckt, der einen Teil der Länge eines Teils der Elektrodenzunge (400, 405, 410, 415, 420, 425, 430, 435, 450, 455, 460, 470, 480, 500) einnimmt, der von der Hülle aus vorspringt,
wobei der nicht ebene Abschnitt eine Biegung umfasst und
jede jeweilige Elektrodenzunge mit einem Isolierband (610, 620) versehen ist, das zwischen jeder jeweiligen Elektrodenzunge und der Hülle geformt ist, **dadurch gekennzeichnet, dass**:
die Elektrodenzunge einen oberen Bereich (L1 und L2, L4) und einen unteren Bereich (L3, L5) umfasst, wobei der obere Bereich von dem oberen Ende der Elektrodenzunge (455) bis zu einer Position, eine Hälfte oder zwei Drittel von dem oberen Ende der Elektrodenzunge, reicht und der untere Bereich von einer Position, eine Hälfte oder zwei Drittel von dem oberen Ende der Elektrodenzunge, bis zu dem oberen Ende eines Isolierbandes (610) reicht,
der nicht ebene Abschnitt in dem oberen Bereich (L1 und L2, L4) der Elektrodenzunge geformt ist, wobei:
wenigstens ein Teil des nicht ebenen Abschnitts einen bogenförmigen Querschnitt hat und/oder
wenigstens ein Teil des nicht ebenen Abschnitts einen geradlinigen Querschnitt hat, der V-formig, W-förmig oder rechteckig ist, und/oder
wobei der nicht ebene Abschnitt eine oder mehrere Riffelungen umfasst, die sägezahnförmig oder sinusförmig sind.

2. Sekundärbatterie nach einem der vorhergehenden Ansprüche, wobei die Elektrodenzunge, die den nicht ebenen Abschnitt hat, einen oder mehrere zusätzliche nicht ebene Abschnitte umfasst.

3. Sekundärbatterie nach einem der vorhergehenden Ansprüche, wobei die Elektrodenzunge (400, 405, 410, 415, 420, 425, 430, 435, 450, 455, 460, 470, 480, 500) eine Breite von 2 mm bis 6 mm hat.

4. Sekundärbatterie nach einem der vorhergehenden Ansprüche, wobei ein Abschnitt der anderen Elektrodenzunge (400, 405, 410, 415, 420, 425, 430, 435, 450, 455, 460, 470, 480, 500) nicht eben ist.

5. Sekundärbatterie nach einem der vorhergehenden Ansprüche, wobei der nicht ebene Abschnitt eine oder mehrere Aussparungen umfasst.

6. Sekundärbatterie nach einem der vorhergehenden Anspruch 5, wobei der nicht ebene Abschnitt mehrere Aussparungen umfasst, die sich im Wesentlichen über die Gesamtheit des nicht ebenen Abschnitts erstrecken.

## Revendications

1. Batterie secondaire, comprenant :
un assemblage d'électrodes (300), comportant une première plaque d'électrode (310) et une deuxième plaque d'électrode (320), chaque plaque d'électrode (310, 320) comportant une patte d'électrode respective (400, 405, 410, 415, 420, 425, 430, 435, 450, 455, 460, 470, 480, 500) s'étendant à partir de la plaque d'électrode (310, 320) ;
dans laquelle une partie de l'une des pattes d'électrode (400, 405, 410, 415, 420, 425, 430, 435, 450, 455, 460, 470, 480, 500) est non plane ;
dans laquelle l'assemblage d'électrodes (300) est logé dans une enceinte, la partie non plane s'étendant le long d'une partie de la patte d'électrode (400, 405, 410, 415, 420, 425, 430, 435, 450, 455, 460, 470, 480, 500), occupant une partie de la longueur de la patte d'électrode (400, 405, 410, 415, 420, 425, 430, 435, 450, 455, 460, 470, 480, 500) débordant de l'enceinte ;
dans laquelle la partie non plane comprend un coude ; et
chaque patte d'électrode respective comporte une bande isolante (610, 620) formée entre chaque patte d'électrode respective et l'enceinte, **caractérisée en ce que** :
la patte d'électrode comprend une région supérieure (L1 et L2, L4) et une région inférieure (L3, L5), la région supérieure s'étendant de l'extrémité supérieure de la patte d'électrode (455) vers une position située à une distance comprise entre la moitié et deux tiers de l'extrémité supérieure de la patte d'électrode, la région inférieure s'étendant d'une position située à une distance comprise entre la moitié et deux tiers de l'extrémité supérieure de la patte d'électrode vers l'extrémité supérieure de la bande isolante (610) ;
la partie non plane étant formée dans la région supérieure de la patte d'électrode (L1 et L2, L4), dans laquelle
au moins une partie de la partie non plane a une section transversale arquée ; et/ou
au moins une partie de la partie non plane a une section transversale rectiligne en forme de V, en forme de W ou de forme rectangulaire ; et/ou
la partie non plane comprend une ou plusieurs cannelures en dents de scie ou sinusoïdales.

2. Batterie secondaire selon l'une quelconque des revendications précédentes, dans laquelle ladite patte d'électrode comportant la partie non plane comprend une ou plusieurs parties non planes additionnelles.

3. Batterie secondaire selon l'une quelconque des revendications précédentes, dans laquelle la patte d'électrode (400, 405, 410, 415, 420, 425, 430, 435, 450, 455, 460, 470, 480, 500) a une largeur comprise entre 2 mm et 6 mm.

4. Batterie secondaire selon l'une quelconque des revendications précédentes, dans laquelle une partie de l'autre patte d'électrode (400, 405, 410, 415, 420, 425, 430, 435, 450, 455, 460, 470, 480, 500) est non plane.

5. Batterie secondaire selon l'une quelconque des revendications précédentes, dans laquelle la partie non plane comprend un ou plusieurs évidements.

6. Batterie secondaire selon la revendication 5, dans laquelle la partie non plane comprend plusieurs évidements s'étendant au-dessus de pratiquement l'ensemble de la partie non plane.
